# EUROPÄISCHE PATENTSCHRIFT

(11) **EP 1 053 266 B1**
(45) Veröffentlichungstag und Bekanntmachung des Hinweises auf die Patenterteilung: **05.11.2003**
(21) Anmeldenummer: 99907420.6
(22) Anmeldetag: 26.01.1999
(51) Int. Cl.: C08F 279/02, C08F 287/00, C08F 4/42

(54) **VERFAHREN ZUR HERSTELLUNG VON SCHLAGZÄH MODIFIZIERTEN, THERMOPLASTISCHEN FORMMASSEN**
METHOD FOR PRODUCING IMPACT-RESISTANT MODIFIED THERMOPLASTIC MOULDING MATERIALS
PROCEDE DE PRODUCTION DE MATIERES DE MOULAGE THERMOPLASTIQUES MODIFIEES A RESISTANCE ELEVEE AUX CHOCS

(30) Priorität: 07.02.1998 DE 19804912; 24.06.1998 DE 19828104
(43) Veröffentlichungstag der Anmeldung: 22.11.2000
(73) Patentinhaber: BASF AKTIENGESELLSCHAFT, 67056 Ludwigshafen (DE)
(72) Erfinder: SCHADE, Christian, D-67061 Ludwigshafen (DE); GAUSEPOHL, Hermann, D-67112 Mutterstadt (DE); FISCHER, Wolfgang, D-69190 Walldorf (DE); MOORS, Rainer, D-76726 Germersheim (DE); WARZELHAN, Volker, D-67273 Weisenheim (DE)
(86) Internationale Anmeldenummer: EP9900480
(87) Internationale Veröffentlichungsnummer: WO99040135

(56) Entgegenhaltungen:
- EP-A- 0 595 121
- WO-A-98/07766
- DE-A- 4 235 978
- F.J. WELCH: "Polymerization of Styrene by n-Butyllithium. II. Effect of Lewis Acids and Bases." JOURNAL OF THE AMERICAN CHEMICAL SOCIETY, Nr. 82, 1960, Seiten 6000-6005, XP002104542

## Beschreibung

Die Erfindung betrifft ein Verfahren zur Herstellung von schlagzäh modifizierten, thermoplastischen Formmassen, die eine Weichphase aus einem Kautschuk dispers verteilt in einer aus vinylaromatischen Monomeren aufgebauten Hartmatrix enthalten.

Zur Herstellung von schlagzähem Polystyrol sind verschiedene kontinuierliche und diskontinuierliche Verfahren in Lösung oder Suspension bekannt. Bei diesen Verfahren wird ein Kautschuk, üblicherweise Polybutadien in monomerem Styrol gelöst, welches in einer Vorreaktion bis zu einem Umsatz von ca. 30 % polymerisiert wird. Durch die Bildung von Polystyrol und gleichzeitige Abnahme des monomeren Styrols kommt es zu einem Wechsel in der Phasenkohärenz. Während diesem als "Phaseninversion" bekannten Vorgang treten auch Pfropfungsreaktionen am Polybutadien auf, die zusammen mit der Rührintensität und der Viskosität die Einstellung der dispersen Weichphase beeinflussen. In der anschließenden Hauptpolymersisation wird die Polystyrolmatrix aufgebaut. Derartige in verschiedenen Reaktorarten durchgeführte Verfahren sind beispielsweise in A. Echte, Handbuch der technischen Polymerchemie, VCH Verlagsgesellschaft Weinheim 1993, Seiten 484 - 489 und den US-Patentschriften US 2 727 884 und 3 903 202 beschrieben.

Bei diesen Verfahren muß der separat hergestellte Kautschuk in aufwendiger Weise zerkleinert und gelöst werden und die so erhaltene Polybutadienkautschuklösung in Styrol vor der Polymerisation zur Entfernung von Gelteilchen filtriert werden.

Die benötigte Kautschuklösung in Styrol kann auch durch anionische Polymerisation von Butadien oder Butadien/Styrol in unpolaren Lösungsmitteln, beispielsweise Cyclohexan oder Ethylbenzol, und nachträgliche Zugabe von Styrol (GB 1 013 205, EP-A-0 334 715) oder durch unvollständigen Umsatz von Butadien in Styrol (EP-A 0 059 231, EP-A 0 304 088) und anschließendem Entfernen des nicht umgesetzten Butadiens hergestellt werden. Die Kautschuklösung wird anschließend einer radikalischen Polymerisation unterworfen.

Verfahren zur Herstellung von thermoplastischen Formmassen durch anionischen Polymerisation von Styrol in Gegenwart eines Kautschuks sind beispielsweise aus DE-A-42 35 978 oder US 4 153 647 bekannt. Die erhaltenen schlagzäh modifizierten Produkte weisen geringere Restmonomeren- und Oligomerengehalte gegenüber den durch radikalische Polymerisation erhaltenen Produkten auf.

Die anionische Polymerisation von Styrol verläuft sehr schnell und führt zu sehr hohen Umsätzen. Aufgrund der hohen Polymerisationsgeschwindigkeit und der damit verbundenen Wärmeentwicklung sind diese Verfahren im technischen Maßstab auf stark verdünnte Lösungen, geringe Umsätze oder tiefe Temperaturen beschränkt.

Es wurden daher Erdalkalimetall-, Zink und Aluminiumalkyle als retardierend wirkende Zusätze für die anionische Polymerisation von Styrol (WO 97/33923, WO 98/07765) oder Butadien in Styrol (WO 98/07766) beschrieben. Mit diesen Zusätzen ist die kontrollierte anionische Polymerisation von Styrol und Butadien zu Homopolymeren oder Styrol-Butadien-Copolymeren möglich.

Die WO 98/07766 beschreibt weiterhin die kontinuierliche Herstellung von schlagzäh modifizierten Formmassen unter Verwendung der durch die retardierend wirkenden Zusätze in styrolischer Lösung erhältlichen Styrol-Butadien-Kautschuke. Die nach diesem Verfahren erhältlichen Kautschuke enthalten jedoch in den Butadienblöcken stets geringe Mengen einpolymerisiertes Styrol.

Aufgabe der Erfindung war es, den genannten Nachteilen abzuhelfen und ein Verfahren zu entwickeln, das es erlaubt restmonomerenund oligomerenarme schlagzäh modifizierte Formmassen herzustellen. Das Verfahren sollte überdies eine einfache und sichere Reaktionskontrolle gewähren. Es sollte für die Verwendung möglichst vieler Kautschuktypen geeignet sein, um ein weites Eigenschaftsspektrum der schlagzäh modifizierten Formmassen zu ermöglichen.

Eine weitere Aufgabe war ein kontinuierlichen Verfahrens zur anionischen Polymerisation von schlagzäh modifizierten Formmassen mit einer einfachen und sicheren Reaktionskontrolle.

Verfahren zur Herstellung von schlagzäh modifizierten, thermoplastischen Formmassen, die eine Weichphase aus einem Kautschuk dispers verteilt in einer aus vinylaromatischen Monomeren aufgebauten Hartmatrix enthalten, dadurch gekennzeichnet, daß man in einer ersten Stufe eine Kautschukisung durch anionische Polymerisation von Butadien und Styrol in einem aliphatischen, isocyclischen oder aromatischen Kohlenwasserstoff oder Kohlenwasserstoffgemisch mit einem Feststoffgehalt im Bereich von 15 bis 50 Gew.-% herstellt, mit einem Abbruch- und/oder Kopplungsmittel umsetzt und anschließend mit vinylaromatischen Monomeren verdünnt und in einer zweiten Stufe ohne weiteren Zusatz von Lösungsmitteln die Hartmatrix in Gegenwart eines Metallorganyls eines Elementes der zweiten oder dritten Hauptgruppe oder der zweiten Nebengruppe des Periodensystems unter Phaseninversion bis zu einem Umsatz von mindestens 90%, bezogen auf die Hartmatrix, anionisch polymerisiert.

Als Metallorganyle eines Elementes der zweiten oder dritten Hauptgruppe oder der zweiten Nebengruppe des Periodensystems können die Organyle der Elemente Be, Mg, Ca, Sr, Ba, B, Al, Ga, In, Tl, Zn, Cd, Hg verwendet werden. Aufgrund ihrer Wirkung bei der anionischen Polymerisation werden diese Metallorganyle auch als Retarder bezeichnet. Bevorzugt werden die Magnesium- und Aluminiumorganyle verwendet. Als Organyle werden die Metallorganischen Verbindungen der genannten Elemente mit mindestens einer Metall-Kohlenstoff σ-Bindung verstanden, insbesondere die Alkyl- oder Arylverbindungen. Daneben können die Metallorganyle noch Wasserstoff, Halogen oder über Heteroatome gebundene organische Reste, wie Alkoholate oder Phenolate, am Metall enthalten. Letztere sind beispielsweise durch ganze oder teilweise Hydrolyse, Alkoholyse oder Aminolyse erhältlich. ES können auch Mischungen verschiedener Metallorganyle verwendet werden.

Geeignete Magnesiumorganyle sind solche der Formel R₂Mg, wobei die Reste R unabhängig voneinander Wasserstoff, Halogen, C₁-C₂₀-Alkyl oder C₆-C₂₀-Aryl bedeuten. Bevorzugt werden Dialkylmagnesiumverbindungen, insbesondere die als Handelsprodukte verfügbaren Ethyl-, Propyl-, Butyl- oder Octylverbindungen eingesetzt. Besonders bevorzugt wird das in Kohlenwasserstoffen lösliche (n-Butyl)(s-Butyl)magnesium eingesetzt.

Als Aluminiumorganyle können solche der Formel R₃Al verwendet werden, wobei die Reste R unabhängig voneinander Wasserstoff, Halogen, C₁-C₂₀-Alkyl oder C₆-C₂₀-Aryl bedeuten. Bevorzugte Aluminiumorganyle sind die Aluminiumtrialkyle wie Triethylaluminium, Tri-iso-Butylaluminium, Tri-n-butylaluminium, Tri-isopropylaluminium, Tri-n-hexylaluminium. Besonders bevorzugt wird Triisobutylaluminium eingesetzt. Als Aluminiumorganyle können auch solche verwendet werden, die durch teilweise oder vollständige Hydrolyse, Alkoholyse, Aminolyse oder Oxidation von Alkyl- oder Arylaluminiumverbindungen entstehen. Beispiele sind Diethylaluminium-ethoxid, Diisobutylaluminium-ethoxid, Diisobutyl-(2, 6-di-tert.-butyl-4-methyl-phenoxy)aluminium (CAS-Nr. 56252-56-3), Methylaluminoxan, isobutyliertes Methylaluminoxan, Isobutylaluminoxan, Tetraisobutyldialuminoxan oder Bis(diisobutyl)aluminiumoxid.

In der Regel wirken die beschriebenen Retarder nicht als Polymerisationsinitiatoren. Üblicherweise werden als anionische Polymerisationsinitiatoren mono-, bi- oder multifunktionellen Alkalimetallalkyle, -aryle oder -aralkyle eingesetzt. Zweckmäßigerweise werden lithiumorganische Verbindungen, eingesetzt wie Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-dilithio-2-buten oder 1,4-Dilithiobenzol. Die benötigte Menge an Alkalimetallorganyl richtet sich nach dem gewünschten Molekulargewicht, der Art und Menge der weiteren eingesetzten Metallorganyle sowie der Polymerisationstemperatur. In der Regel liegt sie im Bereich von 0,002 bis 5 Molprozent bezogen auf Gesamtmonomerenmenge.

Bevorzugte vinylaromatische Monomere für die Hartmatrix sind Styrol, α-Methylstyrol, p-Methylstyrol, Ethylstyrol, tert.-Butylstyrol, Vinyltoluol oder 1,1-Diphenylethylen oder Mischungen. Besonders bevorzugt wird Styrol eingesetzt.

Bevorzugt wird als Kautschuk ein Styrol/Butadienblockcopolymer oder eine Mischung eines Styrol/Butadienblockcopolymeren mit einem Homopolybutadien verwendet, wobei der Styrolgehalt, bezogen auf den gesamten Kautschuk, im Bereich von 5 bis 50 Gew.-%, bevorzugt im Bereich von 10 bis 45 Gew.-%, besonders bevorzugt im Bereich von 20 bis 40 Gew.-% liegt. Der Restbutadiengehalt des Kautschuks sollte unter 200 ppm, bevorzugt unter 100 ppm, insbesondere unter 50 ppm liegen.

Die Polymerisation des Kautschuks erfolgt in einem aliphatischen, isocyclischen oder aromatischen Kohlenwasserstoff oder Kohlenwasserstoffgemisch, bevorzugt in Benzol, Toluol, Ethylbenzol, Xylol, Cumol oder Cyclohexan. Besonders bevorzugt wird Toluol und Ethylbenzol verwendet. Die Polymerisation des Kautschuks kann auch in Gegenwart von flüssigen Zusatzstoffen erfolgen, die gewöhnlich erst bei oder nach der Polymerisation der Hartmatrix zugegeben werden. Der Kautschuk kann beispielsweise in Mineralöl oder in einer Mischung von Mineralöl und den vorgenannten Kohlenwasserstoffen hergestellt werden. Dadurch ist es möglich, die Viskosität oder die Lösungsmittelmenge zu verringern.

Der Feststoffgehalt der erhalten Lösung wird möglichst hoch gewählt. Er wird nach oben hauptsächlich durch die Viskosität der Lösung begrenzt. Die Viskosität und damit der mögliche Feststoffgehalt hängt bei Verwendung eines Styrol-Butadien-Kautschukes unter anderem von der Blockstruktur und dem Styrolgehalt ab. Man wählt einen Feststoffgehalt im Bereich von 15 bis 50 Gew.-%, bevorzugt im Bereich von 20 bis 40 Gew.-%.

Die Polymerisation des Kautschuks kann kontinuierlich oder absatzweise mit einem Puffertank erfolgen. Die kontinuierliche Herstellung kann in "continuos stirred tank reactors" (CSTR-Reaktoren), beispielsweise Rührkessel(kaskaden) oder Kreislaufreaktoren, "plug-flow reactors" (PFR) Reaktoren, beispielsweise Rohrreaktoren mit und ohne Einbauten oder Kombinationen aus verschiedenen Reaktoren erfolgen. Die absatzweise Herstellung erfolgt bevorzugt in einem Rührkessel.

Die Kautschuke können in Gegenwart eines mehrfunktioneillen Alkalimetallorganyls polymerisiert oder während oder nach der Polymerisation mit einem mehrfunktionellen Kopplungsmittel, wie polyfunktionelle Aldehyde, Ketone, Ester, Anhydride oder Epoxide sternförmig verknüpft werden. Hierbei können durch Kopplung gleicher oder verschiedener Blöcke symmetrische und unsymmetrische Sternblockcopolymere erhalten werden.

Nach Beendigung der Polymerisation können die lebenden Polymerketten anstelle einer Kopplung mit einem Kettenabbruchmittel verschlossen werden. Als Kettenabbruchmittel eignen sich protonenaktive Substanzen oder Lewis-säuren wie beispielsweise Wasser, Alkohole, aliphatische und aromatische Carbonsäuren sowie anorganische Säuren wie Kohlensäure oder Borsäure. Das Kettenabbruchmittel wird in einer Menge proportional zu den lebenden Ketten zugegeben.

Zweckmäßigerweise wird die Lösung unmittelbar nach dem Ende der Reaktion mit dem vinylaromatischen Mortomer verdünnt, um die weitere Handhabung zu erleichtern.

Die erhaltene Kautschuklösung wird in einer zweiten Stufe, ggf. unter Zusatz von weiterem vinylaromatischen Monomer wie oben beschrieben polymerisiert.

Der Umsatz, bezogen auf das vinylaromatische Monomer der Hartmatrix beträgt in der Regel über 90 %. Das Verfahren kann prinzipiell auch zu einem vollständigem Umsatz führen.

Der Kautschukgehalt, bezogen auf die gesamte Formmasse beträgt zweckmäßigerweise 5 bis 25 Gew.-%. Er hängt im wesentlichen von der Art des verwendeten Kautschuks und von den gewünschten Eigenschaften der schlagzäh modifizierten Formmasse ab.

Für die oben genannten Bereiche des Feststoffgehaltes der Kautschuklösung und dem üblichen Kautschukgehalt der Formmasse erreicht man einen Feststoffgehalt am Ende der Umsetzung in der zweiten Stufe in der Regel im Bereich von 70 % bis 90 %, insbesondere im Bereich von 75 bis 85 %.

Überraschenderweise wurde gefunden, daß die Polymerisation der Hartmatrix ohne weiteren Zusatz eines anionischen Polymerisationsinitators ausgeführt werden kann, wenn man eine Kaucschuklösung verwendet, die wie oben beschrieben durch anionische Polymerisation und Kettenabbruch bzw. Kopplung terminiert wurde. In diesem Falle können die sonst nur retardierend wirkenden Metallalkyle die Polymerisation der Hartmatrix initiieren. Dadurch ergibt sich eine einfachere Dosierung und Steuerung als bei Verwendung von einer Initiator/Retardermischung.

Bevorzugt wird die anionische Polymerisation der Hartmatrix in der zweiten Reaktionszone ausschließlich durch Zusatz einer Dialkylmagnesiumverbindung gestartet. Bevorzugt ist eine Dialkylmagnesiumverbindung, die mindestens eine sekundäre oder certiäre Alkylgruppe enthält. Ganz besonders bevorzugt ist (n-Butyl)-(s-butyl)magnesium.

Die Polymerisation des Kautschuks und der Hartmatrix kann absatzweise oder kontinuierlich in Rührkesseln, Kreislaufreaktoren, Rohrreaktoren, Turmreaktoren oder Ringscheibenreaktoren polymerisiert werden, wie in WO 97/07766 beschrieben.

Die erhaltenen Formmassen können in üblicher Weise durch Entgaser oder Entgasungsextruder bei Normaldruck oder vermindertem Druck und Temperaturen von 190 bis 320°C von Lösungsmitteln und Restmonomeren befreit werden. Das abgezogene Lösungsmittel kann, gegebenenfalls nach einem Reinigungsschritt wieder der Kautschuksynthese zugeführt werden. Um eine Aufpegelung von Verunreinigungen zu vermeiden, kann eine geringere Menge des Lösungsmittels aus dem Prozeß ausgeschleust und einer anderweitigen Verwendung zugeführt werden.

Das erhaltene Produkt weist einen Restmonomerengehalt von unter 200 ppm, bevorzugt unter 100 ppm, insbesondere unter 50 ppm auf.

Es kann zweckmäßig sein, durch entsprechende Temperaturführung und/oder durch Zusatz von Peroxiden, insbesondere solche mit hoher Zerfallstemperatur wie beispielsweise Dicumylperoxid, eine Vernetzung der Kautschukpartikel zu erreichen.

### Beispiele

### Synthese von Kautschuklösungen

Die Molekulargewichte und Molekulargewichtsverteilungen wurden mittels Gelpermeationschromatographie (GPC) in Tetrahydrofuran und Auswertung der erhalten Chromatogramme unter Verwendung einer Polystyrol-bzw. Polybutadieneichung ermittelt.

Der Styrolgehalt und der 1,2-Vinylgehalt des Butadienanteils im Kautschuk wurde durch Auswertung der ¹H-Kernresonanzspektroskopischen Daten bestimmt

### Beispiel 1

In einem 50 1 fassenden Rührkessel wurden 14 kg trockenes Toluol vorgelegt und unter Rühren mit 1610 g Butadien versetzt. Die Mischung wurde auf 40°C erwärmt und bei dieser Temperatur mit 19,4 g einer 1,5 molaren Lösung von sec.-Butyllithium in Cyclohexan versetzt. Die Innentemperatur stieg nach dem Einsetzen der Polymerisation auf max. 72°C. Nach 17 min wurden weitere 2168 g Butadien innerhalb von 15 min bei einer Innentemperatur von 66-77°C zugegeben und die Mischung weitere 30 min bei 65°C gerührt. Anschließend wurden 2222 g Styrol zugegeben. Die Temperatur stieg zwischenzeitlich bis auf 71°C. Nach 60 min wurde mit 1,6 g Isopropanol abgebrochen. Die Lösung hatte einen Feststoffgehalt von 30 Gew.-%. Durch Zugabe von 20 kg Styrol wurde eine Kautschuklösung mit einem Feststoffgehalt von 17.5 Gew.-% erhalten.

Das erhaltene Butadien-Styrol-Blockcopolymer besaß ein mittleres Molekulargewicht von M_{w} = 308.000 g/mol und eine Verteilungsbreite M_{w}/Mₙ = 1.09 (bestimmt durch Gel-Permeations-Chromatographie, GPC, Polystyrol-Eichung). Der Restbutadiengehalt war kleiner als 10 ppm. Der Scyrolgehalt betrug 37 %; der Butadienanteil des Kautschuks lag zu 9 % in der 1,2-Vinylform vor (bestimmt mittels ¹H-Kernresonanzspektroskopie) Die Lösungsviskosität einer 5,43%igen Lösung des Kautschuks in Toluol betrug 42 mPas.

### Beispiel 2

In einem 50 1 fassenden Rührkessel wurden 14 kg trockenes Toluol vorgelegt und unter Rühren mit 1612 g Butadien versetzt. Die Mischung wurde auf 32°C erwärmt und bei dieser Temperatur mit 17,4 g einer 1,33 molaren Lösung von sec.-Butyllithium in Cyclohexan versetzt. Die Lösung wurde innerhalb von 20 min auf 62°C erwärmt. Weitere 2813 g Butadien wurden innerhalb von 25 min bei einer Innentemperatur von 62 - 79 °C zugegeben. Die Mischung wurde weitere 30 min bei 65°C gerührt. Anschließend wurden mit 52 ml einer 2 gew.-%igen Lösung von Essigsäureethylester die entstandenen Butadienblöcke teilweise gekoppelt und danach 1575 g Styrol zugegeben. Die Temperatur stieg zwischenzeitlich bis auf 69°C. Nach 60 min wurde mit 1,4 ml Isopropanol abgebrochen. Die Lösung hatte einen Feststoffgehalt von 30 Gew.-%. Durch Zugabe von 20 kg Styrol wurde eine Kautschuklösung mit einem Feststoffgehalt von 17,5 Gew.-% erhalten. Die erhaltenen Polymermischung besaß eine bimodale Verteilung mit einem Haupt-Molmassenpeak Mₚ = 329.000 g/mol und einem weiteren Peak bei Mₚ = 166.000 g/mol (GPC, Polybutadien-Eichung). Der Restbutadiengehalt war kleiner als 10 ppm. Der Styrolgehalt des isolierten Kautschuks betrug 26 %; der Butadienanteil des Kautschuks lag zu 12 % in der 1,2-Vinylform vor (¹H-NMR). Die Lösungsviskosität einer 5,43%igen Lösung des Kautschuks in Toluol betrug 97 mPas.

In analoger Weise wurden die Beispiele 3 bis 5 unter Verwendung von Phenylacecylen, Essigsäureethylester bzw. Adipinsäurediethylester als Kopplungsmittel durchgeführt. Die Parameter und Ergebnisse der Kautschuklösungen sind in der Tabelle 1 zusammengestellt:

**Tabelle 1**

| Beispiel | 2 | 3 | 4 | 5 |
|---|---|---|---|---|
| Kopplungsmittel bzw. Additiv | Essigsäure-ethylester | Phenylacetylen | Essigsäure-ethylester | Adipinsäure-diethylester |
| Menge a) | 0,9 g | 1,0 g | 0,9 g | 0,5 g |
| Styrolanteil im Kautschuk | 25 % | 30 % | 15 % | 20 % |
| Feststoffgehalt am Ende der Reaktion | 30 % | 37 % | 35 % | 30 % |
| Feststoffgehalt nach Verdünnung mit Styrol | 17,5 % | 17,5 % | 17,5 % | 12 % |
| Lösungsviskosität (5,43 % in Toluol) | 97 mPas | 55 mPas | 101 mPas | 174 mPas |

| | | | | |
|---|---|---|---|---|
| a) zudosiert als 2 gew.-%ige Lösung in Toluol | | | | |

### Beispiel 6

In einem 50 1 fassenden Rührkessel wurden 13,8 kg trockenes Toluol vorgelegt und unter Rühren mit 228 g Styrol und 14,2 ml einer 1,33 molaren Lösung von s-Butyllithium in Cyclohexan versetzt. Die Lösung wurde innerhalb von 15 min auf 50°C aufgeheizt. Sodann wurden 3570 g Butadien innerhalb von 25 min zugegeben, wobei die Innentemperatur bis auf 74 °C stieg. Die Mischung wurde weitere 30 min bei 65°C gerührt. Anschließend werden 2100 g Styrol zugegeben. Die Temperatur stieg zwischenzeitlich bis auf 70°C. Nach 60 min wurden 1,4 ml Isopropanol zum Reaktionsansatz gegeben. Die Lösung hatte zu diesem Zeitpunkt einen Feststoffgehalt von 30 Gew.-%. Durch Zugabe von Styrol zu dem Ansatz wurde ein Feststoffgehalt von 15 Gew.-% eingestellt. GPC-Analyse der erhaltenen Polymermischung zeigte eine Verteilung mit einem Haupt-Molmassenpeak Mₚ = 296.000 g/mol und einer Schulter bei Mₚ = 225.000 g/mol im Vergleich zu einer Polybutadien-Eichung. Der Restbutadiengehalt war kleiner als 10 ppm. Nach ¹H-NMR betrug der Styrolgehalt des isolierten Kautschuks 39 %; der Butadienanteil des Kautschuks lag zu 11 % in der 1,2-Vinylform vor. Die Lösungsviskosität einer 5,43%igen Lösung des Kautschuks in Toluol betrug 54 mPas.

### HIPS-Synthesen

Die Streckspannung und. Reißdehnung wurden bei 23°C nach DIN 53455 bestimmt. Die verwendeten Probenkörper wurden nach ISO 3167 hergestellt. Die Lochkerbschlagzähigkeit wurde nach DIN 53753 bei 23°C an einem Probekörper mit den Abmessungen 50 mm * 6 mm * 4 mm (Lochdurchmesser: 3 mm) durchgeführt.

### Beispiel 7

Für die kontinuierliche Polymerisation wurde ein doppelwandiger, 3-l Rührkessel mit einem Standard-Ankerrührer verwendet. Der Reaktor war für einen Druck von 60 bar ausgelegt und mit einem Wärmeträgermedium für eine isotherme Polymerisationsführung temperiert.

In den Rührkessel wurden unter Rühren (100 Umdrehungen pro Minute) kontinuierlich 394 g/h Styrol, 686 g/h der Kautschuklösung aus Beispiel 1 und eine Lösung aus 17 g/h einer 0,16 molaren Lösung von (n-Butyl)(s-butyl)magnesium in Heptan/ Toluol (1:4 Gew.-Teile), dosiert und bei einer konstanten Massetemperatur von 79°C gerührt.

Der Austrag des Rührkessels wurde in zwei nacheinander geschaltete, jeweils gerührte und 4 Liter fassende Turmreaktoren weitergefördert. Der erste Turmreaktor wurde bei einer Innentemperatur von 92°C betrieben. Im zweiten Turmreaktor wurde über zwei gleich lange, nacheinander angeordnete Heizzonen die Temperatur so eingestellt, daß die Innentemperatur am Ende der ersten Zone 124°C, am Ende der zweiten Zone 158°C betrug. Am Austritt des Turmreaktors wurde die Polymerisationsmischung über einen Mischer mit 5 g/h Methanol versetzt, anschließend durch ein auf 260°C beheiztes Rohrstück geführt und über ein Druckregelventil in einen auf 25 mbar gehaltenen Vakuumtopf entspannt. Die Schmelze wurde mit einer Schnecke ausgetragen und granuliert.

Nach wenigen Stunden stellte sich ein stabiler Gleichgewichtszustand in allen Anlagenteilen ein. Der Druckabfall über die gesamte Anlage betrug 2,9 bar. Der Feststoffgehalt am Ausgang des Rührkessels betrug 26 Gew.-%, am Ausgang des ersten Turmreaktors 58 Gew.-%, am Ausgang des zweiten Turmreaktors 73 Gew.-%, was einem 100%igen Monomerumsatz entspricht. Die Polystyrol-Matrix besaß ein Molekulargewicht von M_{w} = 164.500 g/mol und eine Uneinheitlichkeit M_{w}/Mₙ von 2,95. Die Verteilung war monomodal. An dem schlagzähen Polystyrol (oder an der Matrix?)wurde ein Gehalt von unter 5 ppm Styrol, unter 5 ppm Ethylbenzol und 83 ppm Toluol bestimmt. Das schlagzähe Polystyrol besaß eine Streckspannung von 27 N/mm², eine Reißdehnung von 25 % und eine Lochkerbschlagzähigkeit von 12 kJ/m².

Die in der Entgasungseinheit gesammelten Brüden wurden nach Destillation für eine erneute Kautschuksynthese von Beispiel 1 herangezogen.

### Beispiel 8

In den Rührkessel aus Beispiel 8 wurden unter Rühren (100 Umdrehungen pro Minute) kontinuierlich 511 g/h Styrol, 488 g/h der Kautschuklösung aus Beispiel 2 und 17,4 g/h einer 0,16 molaren Lösung von (n-Butyl)(s-butyl)magnesium in Heptan/ Toluol (1:4 Gew.-Teile), dosiert und bei einer konstanten Massetemperatur von 86°C gerührt.

Der Austrag des Rührkessels wurde in einen Doppelmantel-Rohr-reaktor mit einem Innendurchmesser von 29,7 mm und einer Länge von 2100 mm weitergefördert. Der Rohrreaktor war für einen Druck von bis zu 100 bar und für eine Temperatur von bis zu 350°C ausgelegt. Der Rohrreaktor wurde über ein im Gleichstrom geführtes Wärmeträgermedium temperiert und die Temperatur der Polymerisationsmischung über drei gleichmäßig über die Reaktionsstrecke verteilte Thermofühler bestimmt. Die Temperatur des Wärmeträgermediums betrug am Rohrreaktoreintritt 105°C. Die höchste Temperatur der Polymerisationslösung wurde am Ende des Rohrreaktors mit 184°C erreicht.

Nach Verlassen des Rohrreaktors wurde der Polymerisationsmischung eine 20 gew.-%ige Lösung von Methanol in Toluol mit 10 ml/h mittels einer HPLC-Pumpe zudosiert und in einem nachgeschalteten Rohrstück mit einem statischen Mischer homogenisiert. Die Polymerschmelze wird über ein Drosselventil in einen auf 20 mbar gehaltenen Entgasungstopf entspannt, mit einer Schneckenpumpe abgezogen, verstrangt und granuliert.

Nach kurzer Zeit stellte sich ein stabiler Gleichgewichtszustand in allen Anlagenteilen ein. Der Druckabfall über die gesamte Anlage betrug 2,2 bar. Der Feststoffgehalt am Ausgang des Rührkessels betrug 41 Gew.-%, am Ausgang des Rohrreaktors 79 Gew.-%, was einem 100%igen Monomerumsatz entspricht. Die Polystyrol-Matrix besaß ein Molekulargewicht von M_{w} = 169.000 g/mol und eine Uneinheitlichkeit M_{w}/Mₙ von 2,62. Es wurde ein Gehalt von unter 5 ppm Styrol, unter 5 ppm Ethylbenzol und 102 ppm Toluol bestimmt. Das schlagzähe Polystyrol besaß eine Streckspannung von 29 N/mm², eine Reißdehnung von 20 % und eine Lochkerbschlagzähigkeit von 11 kJ/m².

Die in der Entgasungseinheit gesammelten Brüden wurden nach Destillation für eine erneute Kautschuksynthese in Beispiel 2 herangezogen.

### Beispiel 9

Als Reaktor wurde ein Doppelmantel-Rohrreaktor mit einem Innendurchmesser von 29,7 mm und einer Länge von 4200 mm eingesetzt. Der Rohrreaktor war für einen Druck von bis zu 100 bar und für eine Temperatur von bis zu 350°C ausgelegt. Der Rohrreakror war in zwei Zonen gleicher Länge unterteilt, die jeweils über ein im Gleichstrom geführtes Wärmeträgermedium temperiert wurden. Die Temperatur der Polymerisationsmischung und des Wärmeträgermediums wurde jeweils über drei gleichmäßig über die Reaktionsstrecke verteilte Thermofühler bestimmt.

In den Rohrreaktor wurden kontinuierlich 387 g/h Styrol, 588 g/h der Kautschuklösung aus Beispiel 3 und 17,5 g/h einer Initiatorlösung dosiert. 100 g der Initiatorlösung bestanden aus 24 g einer 0,8 molaren Lösung von (n-Butyl)(s-butyl)magnesium in Heptan, 1 g einer 1,6 M Lösung von s-Butyllithium in Cyclohexan und 75 g Toluol. Die Temperatur des Wärmeträgermediums betrug an der Eintrittsstelle in den ersten Reaktorabschnitt 100°C. Die Temperatur der Polymerisationslösung betrug am Ende des ersten Rohrreaktorabschnitts 134 °C. Die Temperatur des Wärmeträgermediums betrug am Eintritt in den zweiten Reaktorabschnitt 80°C. Die Temperatur der Polymerisationslösung betrug am Ende des zweiten Rohrreaktorabschnitts im Mittel 183 °C.

Nach Verlassen des Rohrreaktors wurde der Polymerisationsmischung eine 20 gew.-%ige Lösung von Methanol in Toluol mit 10 ml/h mittels einer HPLC-Pumpe zudosiert und in einem nachgeschalteten Rohrstück mit einem statischen Mischer homogenisiert. Die Polymerschmelze wird über ein Drosselventil in einen auf 17 mbar gehaltenen Entgasungstopf entspannt, mit einer Schneckenpumpe abgezogen, verstrangt und granuliert.

Nach kurzer Zeit stellte sich ein stabiler Zustand in allen Anlagenteilen ein. Der Druckabfall über die gesamte Anlage betrug 2,1 bar. Der Feststoffgehalt am Ende des ersten Abschnitts des Rohrreaktors betrug 31 Gew.-%, am Ausgang des Rohrreaktors 80 Gew.-%. Die Polystyrol-Matrix besaß ein Molekulargewicht von M_{w} = 185.000 g/mol und eine Uneinheitlichkeit M_{w}/Mₙ von 2,12. Es wurde ein Gehalt von 12 ppm Styrol, unter 5 ppm Ethylbenzol und 87 ppm Toluol bestimmt. Das schlagzähe Polystyrol besaß eine Streckspannung von 26 N/mm², eine Reißdehnung von 23 % und eine Lochkerbschlagzähigkeit von 11 kJ/m².

Die in der Entgasungseinheit gesammelten Brüden wurden nach Destillation für eine erneute Kautschuksynthese nach Beispiel 3 herangezogen.

### Beispiel 10

Zu einem unter Druck betriebenem und mit einem Ankerrührer ausgestattetem Rührkessel mit einem Volumen von 3 Liter wurden kontinuierlich unter Rühren bei 100 Umdrehungen/min 538 g/h der Kautschuklösung aus Beispiel 4 und 682 g/h Styrol dosiert. Getrennt davon wurde eine Mischung aus 25 g/h einer 0,32 molaren Lösung von s-Butyllithium in Cyclohexan/Toluol (Gewichtsverhältnis 1:4), und 24 g/h einer 4 Gew.-%igen Triisobutylaluminium-Lösung in Toluol in den Reaktor dosiert. Zur Herstellung dieser Mischung wurden die Komponenten kontinuierlich in einem 12,5 ml fassenden Rohrstück vermischt und an den Kessel geleitet. Der Rührkessel wurde mit einem Thermostaten auf eine Innentemperatur von 109°C eingeregelt.

Die Lösung wurde in einen gerührten 4 Liter Turmreaktor weitergefördert, der bei einer Innentemperatur von 110°C betrieben wurde. Der Austrag des Reaktors wurde einem zweiten 4 Liter Turmreaktor zugeführt, der mit zwei gleich großen Heizzonerr versehen war. Die erste Zone wurde auf eine Innentemperatur von 121°C, die zweite auf 158°C eingeregelt. Der Austrag des Reaktors wurde mit 20 g/h einer 10 gew.-%igen Lösung aus Methanol in Toluol versetzt, über einen Mischer und anschließend ein auf 260°C beheiztes Rohrstück geführt und über ein Druckregelventil in einen bei 25 mbar betriebenen Vakuumtopf entspannt. Die Schmelze wurde mit einer Schnecke ausgetragen und granuliert.

Nach wenigen Stunden stellte sich ein konstanter Fahrzustand ein. Der Feststoffgehalt betrug am Ausgang des ersten Kessels 29 Gew.-% und nach dem ersten Turm 56 Gew.-%. Am Austrag der kontinuierlichen Anlage wurde ein quantitativer Umsatz festgestellt. Der Druckabfall über die gesamte Anlage betrug 2,3 bar. Die Polystyrol-Matrix besaß ein Molekulargewicht von M_{w} = 162.400 g/mol und eine Uneinheitlichkeit M_{w}/Mₙ von 2,68; die Verteilung war monomodal. Es wurde ein Gehalt von unter 5 ppm Styrol, unter 5 ppm Ethylbenzol und 112 ppm Toluol bestimmt. Das schlagzähe Polystyrol besaß eine Streckspannung von 17 N/mm², eine Reißdehnung von 35 % und eine Lochkerbschlagzähigkeit von 14 kJ/m².

Die in der Entgasungseinheit gesammelten Brüden wurden nach Destillation für eine erneute Kautschuksynthese nach Beispiel 4 herangezogen.

### Beispiel 11

Zu einem unter Druck betriebenem und mit einem Ankerrührer ausgestattetem Rührkessel mit einem Volumen von 3 Liter wurden kontinuierlich unter Rühren bei 100 Umdrehungen/min 1252 g/h der Kautschuklösung aus Beispiel 5 und 603 g/h Styrol dosiert. Getrennt davon wurde eine Mischung aus 37 g/h einer 0,32 molaren Lösung von s-Butyllithium in Cyclohexan/Toluol (Gewichtsverhältnis 1:4)und 18 g/h einer 8 Gew.-&igen Triisobutylaluminium-Lösung in Toluol in den Reaktor dosiert. Die Komponenten wurden hierzu kontinuierlich in einem 12,5 ml fassenden Rohrstück vermischt und an den Kessel geleitet. Der Rührkessel wurde mit einem Thermostaten auf eine Innentemperatur von 112°C eingeregelt.

Die Lösung wurde in einen gerührten 4 Liter Turmreaktor weitergefördert, der mit zwei gleich großen Heizzonen versehen war. Die erste Zone wurde auf eine Innentemperatur von 125°C, die zweite auf 172°C eingeregelt. Der Austrag des Reaktors wurde mit 20 g/h einer 10 gew.-%igen Lösung aus Methanol in Toluol versetzt, über einen Mischer und anschließend ein auf 260°C beheiztes Rohrstück geführt und über ein Druckregelventil in einen bei 25 mbar betriebenen Vacuumtopf entspannt. Die Schmelze wurde mit einer Schnecke ausgetragen und granuliert.

Nach kurzer Zeit stellte sich ein konstanter Fahrzustand ein. Der Feststoffgehalt betrug am Ausgang des ersten Kessels 36 Gew.-% Am Austrag der kontinuierlichen Anlage wurde ein quantitativer Umsatz festgestellt. Die Polystyrol-Matrix besaß ein Molekulargewicht von M_{w} = 171.000 g/mol und eine Uneinheitlichkeit M_{w}/Mₙ von 2,83; die Verteilung war monomodal. Es wurde ein Gehalt von unter 5 ppm Styrol, unter 5 ppm Ethylbenzol und 96 ppm Toluol bestimmt. Das schlagzähe Polystyrol besaß eine Streckspannung von 20 N/mm², eine Reißdehnung von 36 % und eine Lochkerbschlagzähigkeit von 15 kJ/m².

Die in der Entgasungseinheit gesammelten Brüden wurden nach Destillation erneut zu einer Kautschuksynthese nach Beispiel 5 herangezogen.

### Beispiel 12

Für die kontinuierliche Polymerisation wurde ein doppelwandiger, 1,9-l Rührkessel mit einem Standard-Ankerrührer verwendet. Der Reaktor war für einen Druck von 60 bar ausgelegt und mit einem Wärmeträgermedium für eine isotherme Polymerisationsführung temperiert.

In den Rührkessel wurden unter Rühren (100 Umdrehungen pro Minute) kontinuierlich 280 g/h Styrol, 796 g/h der Kautschuklösung aus Beispiel 6 und eine Lösung aus 19 g/h einer 0,16 molaren Lösung von (n-Butyl)(s-butyl)magnesium in Heptan/ Toluol (Gew.-Verhältnis 1:4) dosiert und bei einer konstanten Massetemperatur von 94°C gerührt.

Der Austrag des Rührkessels wurde in zwei nacheinander geschaltete, jeweils gerührte und 4 Liter fassende Turmreaktoren weitergefördert. Der erste Turmreaktor wurde bei einer Innentemperatur von 102°C betrieben. Im zweiten Turmreaktor wurde über zwei gleich lange, nacheinander angeordnete Heizzonen die Temperatur so eingestellt, daß die Innentemperatur am Ende der ersten Zone 122°C, am Ende der zweiten Zone 160°C betrug. Am Austritt des Turmreaktors wurde die Polymerisationsmischung über einen Mischer mit 5 g/h einer Mischung aus Methanol/Wasser 1:1 versetzt, anschließend durch ein auf 260°C beheiztes Rohrstück geführt und über ein Druckregelventil in einen auf 25 mbar gehaltenen Vakuumtopf entspannt. Die Schmelze wurde mit einer Schnecke ausgetragen und granuliert.

Nach wenigen Stunden stellte sich ein stabiler Gleichgewichtszustand in allen Anlagenteilen ein. Der Druckabfall über die gesamte Anlage betrug 2,8 bar. Der Feststoffgehalt am Ausgang des Rührkessels betrug 37 Gew.-%, am Ausgang des ersten Turmreaktors 58 Gew.-%. Am Ausgang des zweiten Tumreaktors wurde ein quantitativer Umsatz festgestellt. Die Polystyrol-Matrix besaß ein Molekulargewicht von M_{w} = 152.000 g/mol und eine Uneinheitlichkeit M_{w}/Mₙ von 2,62. Die Verteilung war monomodal. Es wurde ein Gehalt von unter 5 ppm Styrol, unter 5 ppm Ethylbenzol und 52 ppm Toluol bestimmt. Das Material besaß eine Streckspannung von 28 N/mm², eine Lochkerbschlagzähigkeit von 13 kJ/m², eine Wärmeformbeständigkeit (Vicat B/50) von 94°C und eine Schmelze-Volumenrate MVR 200/5 (ISO 1133) von 3,9 cm³/10 min . Eine elektronenmikroskopische Aufnahme zeigte eine Zellenteilchenmorphologie. Der mittlere Teilchendurchmesser betrug 3,2 mm.

## Patentansprüche

1. Verfahren zur Herstellung von schlagzäh modifizierten, thermoplastischen Formmassen, die eine Weichphase aus einem Kautschuk dispers verteilt in einer aus vinylaromatischen Monomeren aufgebauten Hartmatrix enthalten, **dadurch gekennzeichnet, daß** man in einer ersten Stufe eine Kautschuklösung durch anionische Polymerisation von Butadien und Styrol in einem aliphatischen, isocyclischen oder aromatischen Kohlenwasserstoff oder Kohlenwasserstoffgemisch mit einem Feststoffgehalt im Bereich von 15 bis 50 Gew.-% herstellt, mit einem Abbruch- und/oder Kopplungsmittel umsetzt und anschließend mit vinylaromatischen Monomeren verdünnt und in einer zweiten Stufe ohne weiteren Zusatz von Lösungsmitteln die Hartmatrix in Gegenwart eines Metallorganyls eines Elementes der zweiten oder dritten Hauptgruppe oder der zweiten Nebengruppe des Periodensystems unter Phaseninversion bis zu einem Umsatz von mindestens 90%, bezogen auf die Hartmatrix, anionisch polymerisiert.

2. Verfahren nach Anspruch 1, **dadurch gekennzeichnet, daß** man als Metallorganyl eine Trialkylaluminium- oder Dialkylmagnesiumverbindung verwendet.

3. Verfahren nach einem der Ansprüche 1 oder 2, **dadurch gekennzeichnet, daß** man als Kautschuk ein Styrol/Butadienblockcopolymer oder eine Mischung eines Styrol/Butadienblockcopolymeren mit einem Homopolybutadien verwendet, wobei der Styrolgehalt, bezogen auf den gesamten Kautschuk, im Bereich von 5 bis 50 Gew.-% liegt.

4. Verfahren nach einem der Ansprüche 1 bis 3, **dadurch gekennzeichnet, dass** der Restbutadiengehalt des Kautschukes unter 200 ppm liegt.

5. Verfahren nach einem der Ansprüche 1 bis 4, **dadurch gekennzeichnet, daß** man als Kohlenwasserstoff ein Mineralöl verwendet.

6. Verfahren nach einem der Ansprüche 1 bis 5, **dadurch gekennzeichnet, daß** man die Polymerisation der Hartmatrix ohne weiteren Zusatz eines anionischen Polymerisationsinitators ausführt.

7. Verfahren nach einem der Ansprüche 1 bis 6, **dadurch gekennzeichnet, daß** man die Polymerisation des Kautschuks und der Hartmatrix kontinuierlich ausführt.

## Claims

1. A process for preparing impact-modified thermoplastic molding compositions which comprise a soft phase made from a rubber dispersed in a hard matrix constructed from vinylaromatic monomers, **characterized in that**, in a first step, a rubber solution with a solids content in the range from 15 to 50% by weight is prepared by anionic polymerization of butadiene and styrene in an aliphatic, isocyclic or aromatic hydrocarbon or hydrocarbon mixture, reacted with a terminator and/or coupling agent and then diluted with vinylaromatic monomers, and, in a second step, without further addition of solvents, the hard matrix is anionically polymerized in the presence of a metal organyl compound of an element of the second or third main group, or of the second subgroup, of the Periodic Table, with phase inversion to a conversion of at least 90%, based on the hard matrix.

2. A process as claimed in claim 1, **characterized in that** the metal organyl compound used is a trialkylaluminum compound or a dialkylmagnesium compound.

3. A process as claimed in claim 1 or 2, **characterized in that** the rubber used is a styrene-butadiene block copolymer or a mixture of a styrene-butadiene block copolymer with a homopolybutadiene, where the styrene content, based on the entirety of the rubber, is in the range from 5 to 50% by weight.

4. A process as claimed in any one of claims 1 to 3, **characterized in that** it comprises using a rubber whose content of residual butadiene is less than 200 ppm.

5. A process as claimed in any one of claims 1 to 4, **characterized in that** the hydrocarbon used is a mineral oil.

6. A process as claimed in any one of claims 1 to 5, **characterized in that** the polymerization of the hard matrix is carried out without further addition of an anionic polymerization initiator.

7. A process as claimed in any one of claims 1 to 6, **characterized in that** the polymerization of the rubber and of the hard matrix is carried out continuously.

## Revendications

1. Procédé de préparation de masses de moulage thermoplastiques, modifiées quant à la résistance au choc, qui contiennent une phase molle à base d'un caoutchouc réparti de manière dispersée dans une matrice dure constituée de monomères vinylaromatiques, **caractérisé en ce que**, dans une première étape, on prépare une solution de caoutchouc par polymérisation anionique de butadiène et de styrène dans un hydrocarbure ou mélange d'hydrocarbures aliphatiques, isocycliques ou aromatiques ayant une teneur en matières solides de l'ordre de 15 à 50% en poids, on fait réagir avec un agent de rupture et/ou de couplage et ensuite on dilue avec des monomères vinylaromatiques et **en ce que**, dans une deuxième étape, sans autre addition de solvants, on polymérise la matrice dure par voie anionique en présence d'un métal-organyle d'un élément du deuxième ou troisième groupe principal ou du deuxième groupe secondaire du système périodique, avec inversion de phases jusqu'à une conversion d'au moins 90%, par rapport à la matrice dure.

2. Procédé suivant la revendication 1, **caractérisé en ce qu'**on utilise, comme métal-organyle, un composé de trialkyl-aluminium ou de dialkyl-magnésium.

3. Procédé suivant l'une des revendications 1 et 2, **caractérisé en ce que**, comme caoutchouc, on utilise un copolymère bloc de styrène/butadiène ou un mélange d'un copolymère bloc de styrène/butadiène avec un homopolybutadiène, la teneur en styrène, par rapport à la totalité du caoutchouc, étant de l'ordre de 5 à 50% en poids.

4. Procédé suivant l'une des revendications 1 à 3, **caractérisé en ce que** la teneur résiduelle en butadiène du caoutchouc est inférieure à 200 ppm.

5. Procédé suivant l'une des revendications 1 à 4, **caractérisé en ce qu'**on utilise une huile minérale comme hydrocarbure.

6. Procédé suivant l'une des revendications 1 à 5, **caractérisé en ce qu'**on effectue la polymérisation de la matrice dure sans autre addition d'un agent d'amorçage de polymérisation anionique.

7. Procédé suivant l'une des revendications 1 à 6, **caractérisé en ce qu'**on effectue la polymérisation du caoutchouc et de la matrice dure en continu.
